(19) Europäisches Patentamt

European Patent Office

Office européen des brevets

(11) Veröffentlichungsnummer: **0 350 968**

**A1**

(12) # EUROPÄISCHE PATENTANMELDUNG

(21) Anmeldenummer: 89115053.4

(22) Anmeldetag: 27.10.86

(51) Int. Cl.⁴ **B23Q 3/155**

(30) Priorität: 06.11.85 DE 3539295

(43) Veröffentlichungstag der Anmeldung:
17.01.90 Patentblatt 90/03

(60) Veröffentlichungsnummer der früheren
Anmeldung nach Art. 76 EPÜ: 0 224 714

(84) Benannte Vertragsstaaten:
AT BE CH DE ES FR GB GR IT LI LU NL SE

(71) Anmelder: Schmoll Maschinen GmbH
**Werkzeug- und Vorrichtungsbau**
**Westerbachstrasse 4**
**D-6242 Kronberg(DE)**

(72) Erfinder: **Kunz, Hans c/o KEIL &**
**SCHAAFHAUSEN**
**Patentanwälte Eysseneckstrasse 31**
**D-6000 Frankfurt am Main 1(DE)**

(74) Vertreter: **Keil, Rainer A., Dipl.-Phys. Dr. et al**
**KEIL & SCHAAFHAUSEN Patentanwälte**
**Eysseneckstrasse 31**
**D-6000 Frankfurt am Main 1(DE)**

(54) Speicherplatte für Werkzeugmaschine.

(57) Der Gegenstand der Anmeldung bezieht sich auf eine Speicherplatte (1) für vorzugsweise mit einer selbsttätigen Werkzeugwechseleinrichtung ausgerüstete Werkzeugmaschinen, bei welcher jedes einer Vielzahl von Werkzeugen (2) von einem wenigstens eine im wesentlichen horizontal angeordnete, entsprechende Werkzeugaufnahmelöcher (3) aufweisende Speicherplatte (1) enthaltenden Werkzeugmagazin mittels einer einen Greifer aufweisenden Werkzeugtransporteinrichtung aus der Speicherplatte (1) nach unten herausgezogen und einer Arbeitseinheit übergeben sowie nach Gebrauch aus der Arbeitseinheit nach unten herausgezogen, wieder zurück zur Speicherplatte (1) gebracht und von unten in eines der Werkzeugaufnahmelöcher (3) gesteckt wird, wobei den Werkzeugaufnahmelöchern (3) Mittel zum reibschlüssigen Halten der Werkzeuge (2) in ihrer im wesentlichen vertikalen Position zugeordnet sind. Eine Grundplatte (6) einer solchen Speicherplatte (1) ist auf ihrer Oberseite (4) mit einer Beschichtung (5) aus elastisch nachgiebigem vorzugsweise abriebfesten, Material, z.B. Kunststoff oder Gummi, versehen, welche den Werkzeugaufnahmelöchern (3) zugeordnete, diesen gegenüber wenigstens über einen Teil ihrer Länge geringfügig verengte Durchbrechungen (7) aufweist.

FIG.3

## Speicherplatte für Werkzeugmaschine

Die Erfindung bezieht sich auf eine Speicherplatte für vorzugsweise mit einer selbsttätigen Werkzeugwechseleinrichtung ausgerüstete Werkzeugmaschinen, bei welcher jedes einer Vielzahl von Werkzeugen von einem wenigstens eine im wesentlichen horizontal angeordnete, entsprechende Werkzeugaufnahmelöcher aufweisende Speicherplatte enthaltenden Werkzeugmagazin mittels einer einen Greifer aufweisenden Werkzeugtransporteinrichtung aus der Speicherplatte nach unten herausgezogen und einer Arbeitseinheit übergeben sowie nach Gebrauch aus der Arbeitseinheit nach unten herausgezogen, wieder zurück zur Speicherplatte gebracht und von unten in eines der Werkzeugaufnahmelöcher gesteckt wird, wobei den Werkzeugaufnahmelöchern Mittel zum reibschlüssigen Halten der Werkzeuge in der im wesentlichen vertikalen Position angeordnet sind.

Aus der DE-A-3 301 036 ist eine Speicherplatte der zuvor genannten Art bekannt, welche aus zwei perforierten platten förmigen Elementen besteht, von welchen eines dünner ist als das andere. Die beiden plattenförmigen Elemente sind aneinander befestigt und weisen in einer Matrix angeordnete Löcher auf. Die eine Platte trägt darüber hinaus wellenförmige Rillen, deren Tiefe geringer ist als die Materialstärke dieser Platte. Federdrähte liegen derart in den Rillen, daß sie in die Löcher eingreifen und auf den in die Löcher hineinragenden Abschnitt der Werkzeuge eine Reibung ausüben, welche die Werkzeuge, die von unten eingesetzt sind, am Herausfallen hindern. Diese Lösung hat den Nachteil eines verhältnismäßig hohen Herstellungsaufwandes. Die Federdrähte können außerdem nicht immer einen zuverlässigen Sitz der Werkzeuge gewährleisten.

Aufgabe der Erfindung ist es, eine Speicherplatte der gattungsgemäßen Art einfacherer Konstruktion sowie zuverlässiger und dauerhafter Funktionsfähigkeit zu schaffen.

Diese Aufgabe wird mit der Erfindung im wesentlichen dadurch gelöst, daß eine Grundplatte auf der Oberseite mit einer Beschichtung aus elastisch nachgiebigem, vorzugsweise abriebfestem, Material, z.B. Kunststoff oder Gummi, versehen ist, welche den Werkzeugaufnahmelöchern zugeordnete, diesen gegenüber wenigstens über einen Teil ihrer Länge geringfügig verengte Durchbrechungen aufweist.

Eine solche Speicherplatte ist sehr einfach herstellbar sowie zuverlässig und dauerhaft in ihrer Funktion. Es wird nur eine einzige Grundplatte benötigt, deren Beschichtung den jeweiligen Halteschaft der eingesetzten Werkzeuge reibschlüssig hält.

Die den Halteschaft des jeweiligen Werkzeuges mit geringem Spiel aufnehmenden Werkzeugaufnahmelöcher sind bei einer be sonderen Ausgestaltung des Erfindungsgedankens an ihrer Unterseite, vorzugsweise konisch, aufgeweitet. Auf diese Weise lassen sich die Werkzeuge leicht von unten in die entsprechenden Werkzeugaufnahmelöcher unter selbsttätiger Zentrierung einsetzen, auch wenn der Greifer der Werkzeugtransporteinrichtung nicht genau unterhalb des entsprechenden Werkzeugaufnahmeloches steht.

Mit der Erfindung wird ferner vorgeschlagen, daß die Durchbrechungen an dem der Oberseite der Grundplatte zugewandten Seite der Beschichtung etwa den gleichen Durchmesser wie oder nur einen geringfügig größeren Durchmesser als die angrenzenden Werkzeugaufnahmelöcher haben und sich in Richtung von der Grundplatte weg, vorzugsweise konisch, bis auf einen Durchmesser verjüngen, welcher kleiner ist als der kleinste Durchmesser der Werkzeugaufnahmelöcher. Hierdurch wird vermieden, daß beim Einstecken der Werkzeuge in die Werkzeugaufnahmelöcher von unten die Beschichtung von der Grundplatte abgehoben wird. Die vorzugsweise konische Verjüngung des Durchmessers der Durchbrechungen nach oben gewährleistet ein leichtes Einschieben des Werkzeughalteschaftes bei sicherer reibschlüssiger Halterung.

Weitere Ziele, Merkmale, Vorteile und Anwendungsmöglichkeiten der vorliegenden Erfindung ergeben sich aus der nachfolgenden Beschreibung eines Ausführungsbeispiels anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:

Fig. 1 in Draufsicht eine die Erfindung aufweisende Speicherplatte,

Fig. 2 eine Seitenansicht der Speicherplatte aus Richtung II von Fig. 1, und

Fig. 3 eine vergrößerte Detaildarstellung eines Ausschnittes X der Speicherplatte von Fig. 2, teilweise geschnitten.

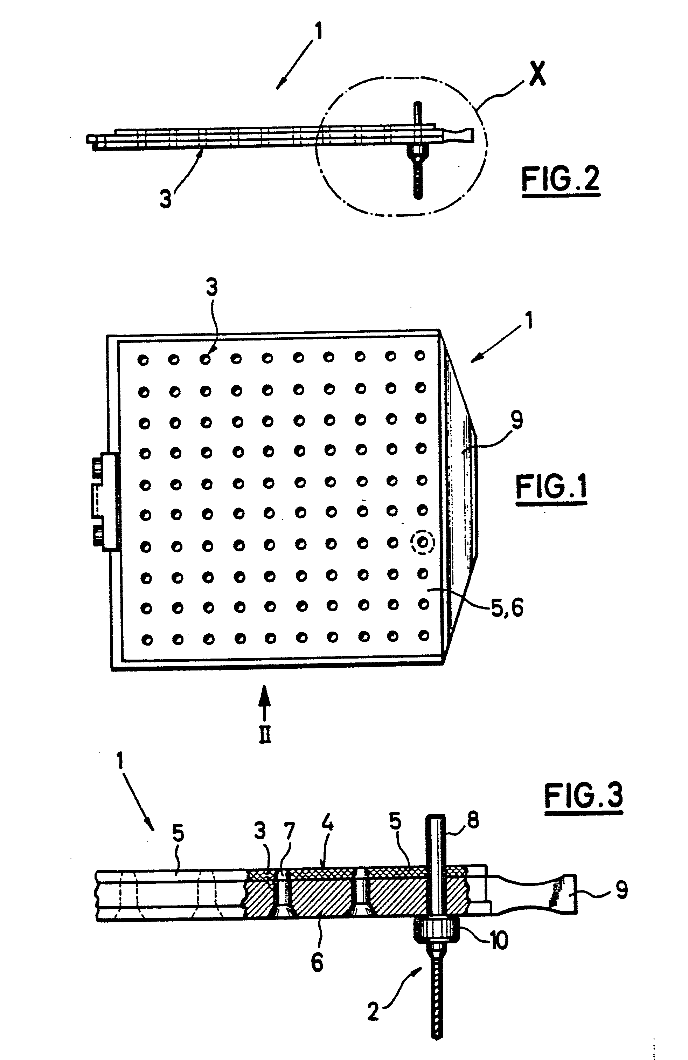

Die eine Griffleiste 9 aufweisende Speicherplatte 1 besteht im wesentlichen aus einer in Fig. 1 im wesentlichen quadratischen Grundplatte 6 mit einer Beschichtung 5 aus elastischem, nachgiebigem, vorzugsweise abriebfesten Kunststoff- oder Gummimaterial. Die Grundplatte 6 ist mit einem Rechteckraster aus Löchern 3 für die Aufnahme von Werkzeugen 2, im dargestellten Falle Bohrern, ausgestattet. Die Werkzeuge 2 werden, wie insbesondere aus Fig. 3 ersichtlich, von unten mit ihrem nach oben weisenden Halteschaft 8 in das entsprechende Werkzeugaufnahmeloch 3 eingesteckt, bis ein Anschlag 10 an der Unterseite der Grundplatte 6 zu liegen kommt. Das Einstecken wird dadurch erleichtert, daß die Werkzeugaufnahmelöcher 3 nach unten konisch aufgeweitet sind. Die auf der Oberseite 4 der Grundplatte 6 aufgebrachte und festgelegte, z.B. aufgeklebte Beschichtung 5 hat den Werkzeugaufnahmelöchern 3 zugeordnete Durchbrechungen 7. Die Durchbrechungen 7 haben benachbart der Grundplatte den gleichen Durchmesser wie an dieser Stelle die Werkzeugaufnahmelöcher 3, oder sie sind in ihrem Durchmesser geringfügig größer. Die Durchbrechungen 7 verjüngen sich ferner nach oben etwas konisch, so daß der Durchmesser der Durchbrechungen 7 weiter oben jedenfalls kleiner ist als der kleinste Durchmesser der Werkzeugaufnahmelöcher 3. Die Verjüngung ist so getroffen, daß die von der Beschichtung 5 aus Kunststoff- oder Gummimaterial auf die Oberfläche des Halteschafts 8 ausgeübten Reibungskräfte ausreichen, um das Werkzeug 2 trotz seines Gewichtes in dem entsprechenden Werkzeugaufnahmeloch 3 zu halten. Allerdings kann das Werkzeug 2 aus seiner in Fig. 3 dargestellten Speicherposition ersichtlich mit einem Greifer wieder nach unten aus der Speicherplatte 1 herausgezogen werden. Aufgrund der Elastizität des Materials der Beschichtung 5 nehmen die vorher entsprechend dem Querschnitt des Halteschaftes 8 aufgeweiteten und sich um den Halteschaft 8 spannenden Durchbrechungen 7 wieder die ursprünglich sich nach oben verjüngende Gestalt ein. Sollte das Material der Beschichtung 5 bei längerem Gebrauch ermüden, kann diese ohne weiteres gegen eine neue Beschichtung ausgetauscht werden.

Bezugszeichenliste

1 Speicherplatte
2 Werkzeuge
3 Werkzeugaufnahmelöcher
4 Oberseite
5 Beschichtung
6 Grundplatte
7 Durchbrechungen
8 Halteschaft
9 Griffleiste
10 Anschlag

selbsttätigen Werkzeugwechseleinrichtung ausgerüstete Werkzeugmaschinen, bei welcher jedes einer Vielzahl von Werkzeugen (2) von einem wenigstens eine im wesentlichen horizontal angeordnete, entsprechende Werkzeugaufnahmelöcher (3) aufweisende Speicherplatte (1) enthaltenden Werkzeugmagazin mittels einer einen Greifer aufweisenden Werkzeugtransporteinrichtung aus der Speicherplatte (1) nach unten herausgezogen und einer Arbeitseinheit übergeben sowie nach Gebrauch aus der Arbeitseinheit nach unten herausgezogen, wieder zurück zur Speicherplatte (1) gebracht und von unten in eines der Werkzeugaufnahmelöcher (3) gesteckt wird, wobei den Werkzeugaufnahmelöchern (3) Mittel zum reibschlüssigen Halten der Werkzeuge (2) in ihrer im wesentlichen vertikalen Position angeordnet sind, dadurch gekennzeichnet, daß eine Grundplatte (6) auf ihrer Oberseite (4) mit einer Beschichtung (5) aus elastisch nachgiebigem, vorzugsweise abriebfesten, Material, z.B. Kunststoff oder Gummi, versehen ist, welche den Werkzeugaufnahmelöchern (3) zugeordnete, diesen gegenüber wenigstens über einen Teil ihrer Länge geringfügig verengte Durchbrechungen (7) aufweist.

2. Speicherplatte nach Anspruch 1, dadurch gekennzeichnet, daß die den Halteschaft (8) des jeweiligen Werkzeugs (2) mit geringem Spiel aufnehmenden Werkzeugaufnahmelöcher (3) an ihrer Unterseite, vorzugsweise konisch, aufgeweitet sind.

3. Speicherplatte nach Anspruch 1 oder 2, dadurch gekennzeichnet, daß die Durchbrechungen (7) an dem der Oberseite (4) der Grundplatte (6) zugewandten Seite der Beschichtung (5) etwa den gleichen Durchmesser wie oder einen geringfügig größeren Durchmesser als die angrenzenden Werkzeugaufnahmelöcher (3) haben und sich in Richtung von der Grundplatte (6) weg, vorzugsweise konisch, bis auf einen Durchmesser verjüngen, welcher kleiner ist als der kleinste Durchmesser der Werkzeugaufnahmelöcher (3).

**Ansprüche**

1. Speicherplatte für vorzugsweise mit einer

**FIG.2**

**FIG.1**

**FIG.3**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE - A1 - 3 301 036 (POSALUX S.A.) * Gesamt * -- | 1 | B 23 Q 3/155 |
| A | DE - A - 1 808 705 (MOLINS MACHINE COMP.) ---- | | |

|  |  |
|---|---|
| | RECHERCHIERTE SACHGEBIETE (Int. Cl.4) |
| | B 23 Q 3/00<br>B 23 Q 29/00 |

Der vorliegende Recherchenbericht wurde für alle Patentansprüche erstellt.

| Recherchenort | Abschlußdatum der Recherche | Prüfer |
|---|---|---|
| WIEN | 24-10-1989 | NIMMERRICHTER |